# EUROPEAN PATENT APPLICATION

(11) **EP 4 851 914 A1**
(43) Date of publication of application: **09.12.2026**
(21) Application number: 25300074.9
(22) Date of filing: 06.06.2025
(51) Int. Cl.: G06T 5/60, G06T 5/70

(54) **SPATIO-TEMPORAL TRANSFORMERS**

(71) Applicant: Sony Interactive Entertainment Inc., Tokyo 108-0075 (JP)
(72) Inventor: LECHAT, Alexis, Tokyo, 108-0075 (JP); MAKRIDIS, Pavlos, Tokyo, 108-0075 (JP); TREDER, Matthias, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for a spatio-temporal transformer for denoising operations. A method includes: receiving a temporal sequence of noisy image frames as input to a vision transformer; for each of a plurality of image frames of the temporal sequence: computing, using a self-attention module, a self-attention map from noisy features of a current image frame, computing, using a cross-attention module, a cross-attention map from the noisy features of the current image frame and denoised features of a preceding image frame, generating a fused attention map by combining the self-attention map and the cross-attention map, and generating denoised features of the current image frame, including applying the fused attention map to values of the noisy features of the current image frame; and providing a sequence of denoised image frames corresponding to the temporal sequence of noisy image frames for presentation by a display system.

## Description

### TECHNICAL FIELD

This specification relates generally to real-time rendering of digital images and more particularly to denoising image data.

### BACKGROUND

Real-time rendering includes rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. The goal of real-time rendering is to produce photo-realistic images at high speed.

### SUMMARY

This specification describes systems, methods, devices, and other techniques relating to real-time rendering of digital images and more particularly to generating denoised image frames by incorporating historical denoised image frame data using a combination of self-attention and cross-attention mechanisms.

In general, innovative aspects of the subject matter described in this specification can include actions of: receiving a temporal sequence of noisy image frames as input to a vision transformer configured to denoise the sequence of noisy image frames using at least a self-attention module and a cross-attention module; for each of a plurality of image frames of the temporal sequence of image frames: computing, using the self-attention module, a self-attention map from noisy features of a current image frame of the sequence, computing, using the cross-attention module, a cross-attention map from the noisy features of the current image frame and denoised features of a preceding image frame of the sequence, generating a fused attention map by combining the self-attention map and the cross-attention map, and generating denoised features of the current image frame, including applying the fused attention map to values of the noisy features of the current image frame; and providing a sequence of denoised image frames corresponding to the temporal sequence of noisy image frames for presentation by a display system. Other implementations of this aspect include corresponding systems, apparatus, and computer programs, configured to perform the actions of the methods, encoded on computer storage devices.

These and other implementations can each optionally include one or more of the following features. In some implementations, the actions include: accessing geometric features of the current image frame from a buffer; and computing, using the self-attention module, a geometric attention map from the geometric features of the current image frame using the self-attention module. Computing the fused attention map includes combining the self -attention map, the cross-attention map, and the geometric attention map.

In some implementations, the geometric features include one or more of: depth, surface orientation, albedo, ambient occlusion, specular reflection intensity, shadow intensity, light emission, or motion.

In some implementations, combining the self-attention map, the cross-attention map, and the geometric attention map includes performing per-pixel gating between the self-attention map, the cross-attention map, and the geometric attention map.

In some implementations, the actions include training the vision transformer, including: obtaining a training set of noisy image frames; obtaining a set of ground truth image frames corresponding to the training set of noisy image frames; processing the training set of noisy image frames with the vision transformer to obtain an output including a set of denoised image frames; and updating parameters of the vision transformer based on a comparison of the set of denoised image frames and the ground truth image frames.

In some implementations, the actions include storing denoised features of one or more previous frames in a history buffer, the one or more previous frames including the preceding image frame.

In some implementations, the cross-attention map includes an aggregated cross-attention map, and computing the aggregated cross-attention map includes: computing, using the cross-attention module, a first cross-attention map from the noisy features of the current image frame and the denoised features of the preceding image frame of the sequence; accessing a second cross-attention map in a history buffer, the second cross-attention map being computed from the noisy features of the preceding image frame and denoised features of another previous image frame of the sequence; and computing the aggregated cross-attention map by combining the first cross-attention map and the second cross-attention map.

In some implementations, combining the first cross-attention map and the second cross-attention map includes performing a convolution on the first cross-attention map and the second cross-attention map.

In some implementations, generating the denoised features of the current image frame further includes: obtaining a first output from applying the fused attention map to values of the noisy features of the current image frame; obtaining a second output from applying the cross-attention map to values of the denoised features of the preceding image frame; and combining the first output and the second output.

In some implementations, the sequence of noisy image frames represents one or more objects in a virtual environment.

In some implementations, each image frame of the sequence of noisy image frames captures the virtual environment at a different respective time instance.

In some implementations, the noisy features of the current image frame are patch-embedded.

In some implementations, the denoised features of the preceding image frame are patch-embedded.

The present disclosure also provides a non-transitory computer-readable storage medium coupled to one or more processors and having instructions stored thereon which, when executed by the one or more processors, cause the one or more processors to perform operations in accordance with implementations provided herein.

The present disclosure also provides a computer-implemented system including: at least one processor; and a memory storing instructions that, when executed by the at least one processor, cause the at least one processor to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed to realize one or more of the following advantages. By incorporating information for one or more previous denoised frames in the attention mechanism, long-term coherence can be achieved, thereby avoiding the need to restart accumulation every frame and improving efficiency of computation. The disclosed techniques take advantage of the redundancy provided by path-traced sequences in order to improve image quality, while maintaining sample counts low. This can produce sharper details, reduce artifacts such as temporal flicker, ghosting (especially around shadows), translucency, and sub-pixel motion. The technology described herein can also maintain coherence across long sequences at low sample counts, without sacrificing the spatial expressiveness of transformer layers. Furthermore, unwanted artifacts from a previous image frame-such as ghosting effects-can be prevented from being carried over to the current image frame.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGS. 1A and 1B depict diagrams representative of techniques for real-time rendering of images in accordance with implementations of the present disclosure.
FIGS. 2A to 2E depict diagrams and images representative of noise introduced in real-time rendering of images in accordance with implementations of the present disclosure.
FIG. 3 depicts a diagram of an example transformer block including a self-attention module and a cross-attention module in accordance with implementations of the present disclosure.
FIG. 4 depicts an example transformer block including a self-attention module and a cross-attention module with temporal accumulation in accordance with implementations of the present disclosure.
FIG. 5 is a flow diagram of an example process in accordance with implementations of the present disclosure.
FIG. 6 shows an example of a computing device and associated accessories that can be employed to execute implementations of the present disclosure.

Like reference numbers and designations in the various drawings indicate like elements.

### DETAILED DESCRIPTION

The technology of this patent application is directed to real-time rendering of digital images denoising image data. More particularly, the technology of this patent application generating denoised image frames by incorporating historical denoised image frame data using a combination of self-attention and cross-attention mechanisms. Specifically, the technology described herein includes a temporal cross-attention transformer block that enhances spatial transformer denoisers by learning frame-to-frame correspondence. The temporal cross-attention transformer block processes noisy frame features, geometry-buffer or G-buffer features (a collection of textures and features used for lighting calculations in 3D rendering), and denoised frame features from a previous frame to generate a temporal attention map that captures inter-frame patch affinities. The temporal attention map is fused with spatial attention maps (e.g., such as generated by a self-attention module) to amplify consistent matches. The fused attention map re-weights value tensors to produce an enhanced feature map for further processing or image reconstruction. Supervised training with clean frames helps the model achieve temporally coherent denoising while reducing ghosting and flicker. The technology described herein is compatible with various types of transformer blocks and can be implemented without adding significant overhead to achieve high-quality temporally stable denoising.

Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

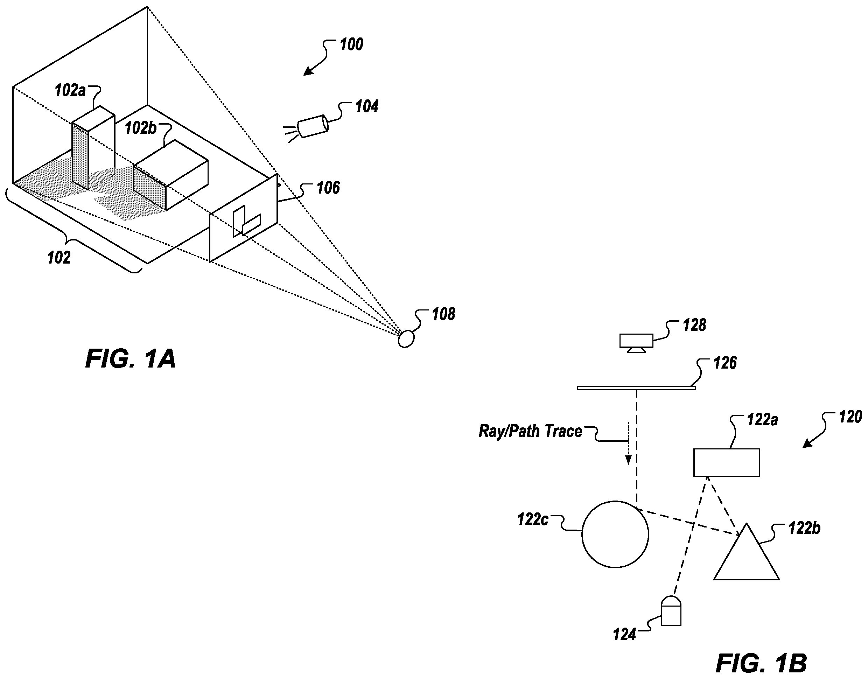

Real-time rendering of images is discussed in further detail herein with reference to FIGS. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. Each image frame of a sequence of image frames captures the virtual environment at a different respective time instance. The image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGB data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as ray tracing and path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual environment or scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

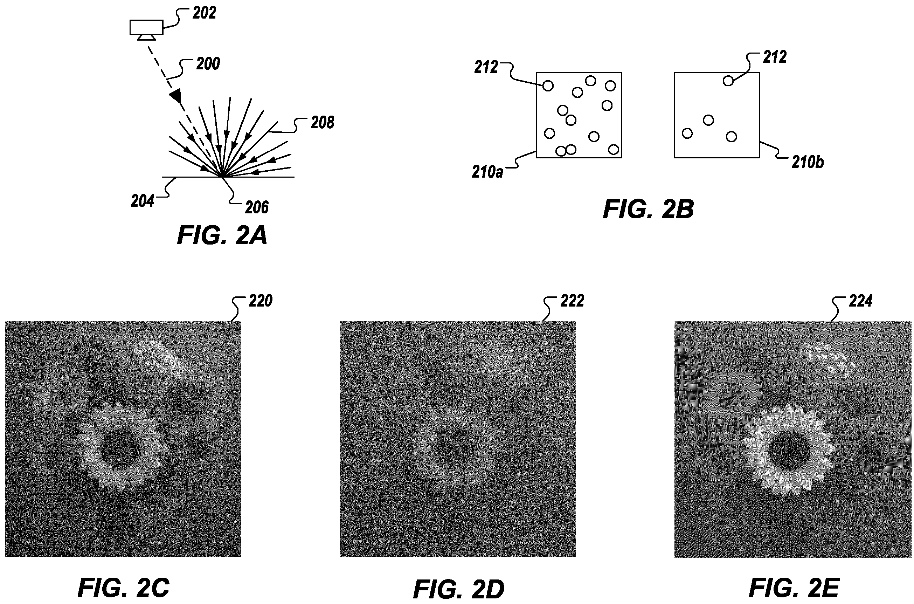

FIGs. 2A to 2E depict diagrams and images representative of noise introduced in real-time rendering of images. In the example of FIG. 2A, for a pixel, a path 200 of a ray is cast from a camera 202 and contact a surface 204 at a point 206. Here, the surface 204 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

In Monte Carlo rendering, denoising can be implemented in various ways. While convolutional neural networks (CNNs) are commonly used for Monte Carlo rendering, Vision Transformers (ViTs) have recently shown strong performance in image understanding and are being applied to Monte Carlo rendering pipelines. A ViT is a transformer-based neural network adapted for image processing tasks, such as denoising and adaptive sampling in Monte Carlo rendering. A ViT operates on noisy, low SPP rendered images and can utilize auxiliary data, such as surface normals, depth, and albedo. The input image can be divided, for example, into fixed-size patches, which are processed as tokens (e.g., using self-attention) to capture spatial and contextual relationships. Attentions are used to focus on specific features rather than giving importance to all the features. In a self-attention mechanism, an output feature map is extracted from the input feature map by weight-averaging a linearly embedded feature value by the attention map which represents self-similarity in input features. In this way, the attention mechanism assigns weights to, and extracts relevant context from, other tokens (e.g., patches) of a sequence based on their relevance or importance to a target token. Self-attention operates on the relation or similarity between different parts of an input image, computing a score for each pair of parts. This type of attention is useful in scene understanding tasks where the model needs to capture long-range dependencies and contextual information. For example, in a scene understanding model, self-attention can help the model to understand the relationships between different objects in a scene. ViTs can apply self-attention to entire images.

The output of the ViT is a denoised image approximating the quality of a high SPP render. A ViT can also support adaptive sampling by identifying regions requiring additional samples, thereby improving efficiency and image fidelity, while reducing computational cost.

In view of the foregoing, implementations of the present disclosure provide a cross-attention module that takes current and previous features to generate a new feature map. Unlike ViT denoisers that operate per-frame and rely solely on motion-vector post-filters to regain history, the cross-attention transformer learns content-aware correspondences between successive frames inside the attention mechanism itself. This yields sharper detail, dramatically reduces temporal flicker and ghosting, especially around shadows, translucency, and sub-pixel motion, and maintains coherence across long sequences at low sample counts, all without sacrificing the spatial expressiveness of transformer layers.

The previous frame(s) may include failure cases, such as ghosting effects. The disclosed techniques can prevent such artifacts from carrying over to the current frame. The transformers can receive the information from the previous frame(s) and automatically update its weight on the attention map to alleviate effects. Similarly, the previous frame(s) may include high quality denoised pixel data, and the transformer blocks can re-use the high quality pixels from the previous frame.

In some implementations, a history buffer stores feature maps of high quality denoised previous frames. The transformer can sample the stored feature maps in order to compute new attention weights. For example, as described in greater detail below, the transformer can generate attention map(s) from multiple historical frames in order to weight the values of the current image frame based on the image history.

The self-attention module focuses primarily on spatial and low level noise. The cross-attention module can accumulate correct features and address inter-frame inconsistencies such as correlated noise. By integrating the self-attention module with the cross-attention module, render images can be accurately and efficiently denoised.

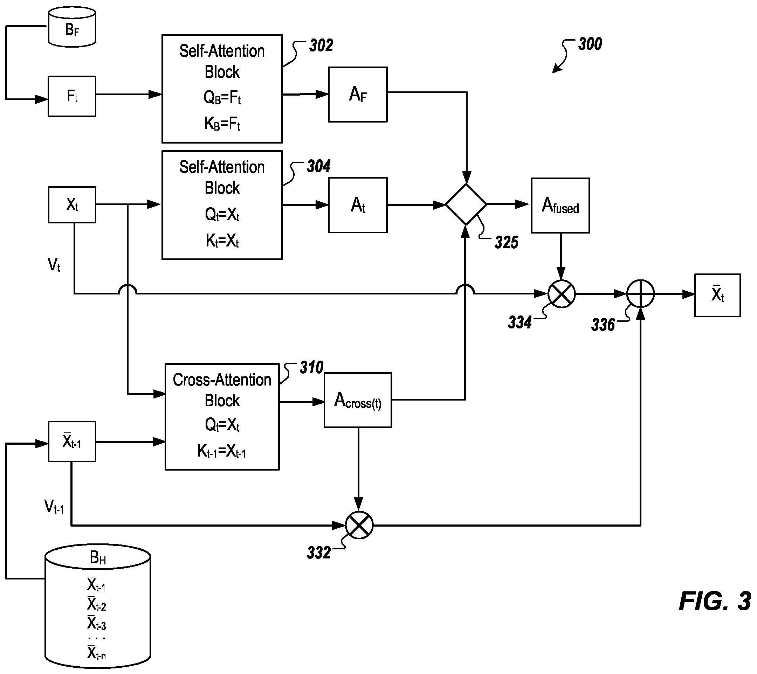

FIG. 3 is a diagram of a spatio-temporal transformer block 300 for a denoising framework. The transformer block 300 can be, for example, a single block of vision transformer that includes multiple transformer blocks connected end-to-end.

The vision transformer receives, as input, a temporal sequence of noisy images. Frame t is a current frame of the sequence. Frame t-1 is a previous frame in a sequence of images (e.g., an immediately preceding image frame of Frame t).

The transformer block 300 takes, as input, a feature map Xt for a noisy current frame and a feature map X̅ₜ₋₁ for a denoised preceding frame. The feature maps Xt and X̅ₜ₋₁ are patch-embedded, and each patch can be processed by the transformer block 300 as a token. Xt and X̅ₜ₋₁ can be in RGB space (three channels) or features space (C channels) as long as Xt and X̅ₜ₋₁ share the same dimensions (e.g., height, width, channel).

The Xt represents patch-embedded noisy features of current Frame t. A self-attention block 304, or self-attention module, generates a self-attention map At from noisy Frame t. The self-attention map At is used to perform self-attention for each patch in noisy Frame t with each other patch in noisy Frame t.

The self-attention block 304 is built on query (Qt) and key (Kt), which are used to compute the self-attention map Aₜ. Values Vₜ are also drawn from the noisy features Xt. The Qt, Kt, and Vₜ of the self-attention layer are derived from the input features Xt of the current Frame t, since the current Frame t is the frame currently being evaluated.

In self-attention, a query functions as the part of a token that is being searched, for similarity. A key functions as the part of all other tokens that query is compared against. Referring to the example of FIG. 3, the comparison can be done by the dot-product of the vectors Qt and key Kt which produces pairwise similarity measures, or attention scores. The attention scores indicate how much each element in the input sequence should be focused on. The attention scores are organized in the attention map At, which can be represented as a matrix in which each row corresponds to an element in the query sequence and each column to an element in the key sequence. The value at a specific row and column represents the attention score between the corresponding query and key elements. The attention scores can be turned into pairwise weights by normalizing. The value Vₜ, also drawn from Xt, is the part of a token that is later combined using the pairwise weights.

The self-attention block 302 generates a geometric attention map A_{F}. To generate the geometric attention map A_{F}, the transformer block 300 can access a geometric buffer B_{F} to obtain buffer features Ft for Frame t. The buffer features Ft can include per-pixel features such as normal, depth, albedo, ambient occlusion, specular reflection intensity, shadow intensity, light emission, motion vectors, or any combination of the above, at Frame t. In some examples, Ft is a tensor output of a projection layer (such as a two-dimensional convolutional layer) that takes all buffers as input. Thus, the dimensions of Ft can vary depending on the design of the model. A geometric attention map A_{F} is extracted from the buffer data Bₜ. For example, the geometric attention map A_{F} can be formed by the query Q_{B} and key K_{B}, which are drawn from Ft.

The transformer block 300 can access a history buffer B_{H} to obtain denoised features X̅ for historical frames. Historical frames are image frames that occurred before the current Frame t in the temporal sequence. The history buffer B_{H} can store denoised features X̅ for any number of historical frames. For example, the history buffer B_{H} can store denoised features X̅ₜ₋₁, X̅ₜ₋₂, X̅ₜ₋₃, ... , X̅ₜ₋ₙ. The X̅ₜ₋₁represents Frame t-1 (the frame immediately preceding the current frame) denoised.

In some examples, prior to being input to the transformer block 300, X̅ₜ₋₁ is motion-vector reprojected to the current Frame t. The X̅ₜ₋₁ can be motion-vector reprojected, for example, using motion-vectors provided by the game engine and stored in the G-buffer B_{F}. Motion-vector reprojecting addresses misalignment between the current frame and the preceding frame, such as due to movement of the camera. Motion vector re-projecting aligns the pixels using the motion vectors in order to take advantage of information from the preceding frame. A motion vector can be, for example, a two-dimensional vector that provides an offset between the preceding frame and the current frame.

In some examples, X̅ₜ₋₁ is patch-embedded. A patch-embedded image frame is split into non-overlapping patches. Each patch can be linearly projected into a vector representation. The patches can then be processed as tokens by the transformer block 300.

In some examples, X̅ₜ₋₁ can represent multiple frames that are concatenated channel-wise. In some examples, X̅ₜ₋₁ can represent multiple previous frames that are aggregated to keep the number of channels constrained.

A cross-attention block 310, or cross-attention module, generates a cross-attention map A_{cross(t)} from noisy Frame t and denoised Frame t-1. The cross-attention map A_{cross(t)} is used to perform cross-attention for each patch in denoised Frame t-1 with each patch in noisy Frame t.

The cross-attention block 310 is built on a query (Qt) drawn from Xt, and key (Kₜ₋₁) drawn from X̅ₜ₋₁. Values Vₜ₋ₗ are also drawn from X̅ₜ₋₁. A dot-product of the vectors Qt and key Kₜ₋₁ produce the attention scores represented by the cross-attention map A_{cross(t)}. The attention map A_{cross(t)} is a temporal attention map that captures inter-frame patch affinities.

In some implementations, the cross-attention block 310 includes multiple input channels, one for each of multiple previous frames represented by X̅ₜ₋₁. In this way the cross-attention block 310 can generate a single attention map Across(t) formed from inputs from multiple previous image frames accessed from the history buffer B_{H}. The resulting attention map A_{cross(t)} can therefore be aware of the history represented by the multiple previous image frames from the history buffer B_{H}.

A merging model 325 merges the temporal attention map A_{cross(t)} with the spatial self- attention map At and the geometric attention map A_{F} to generate a fused attention map A_{fused}. The attention maps A_{cross(t)}, At, and A_{F} can be merged by per-pixel gating or other types of attention merging mechanisms, as described in greater detail below. The merging model 325 is trained end-to-end to automatically detect and allocates which features from the input attention maps to use for the fused attention map A_{fused}.

In some examples, the merging model 325 merges the attention maps using learned parameters. In some examples, the merging model 325 can perform an element-wise product or element-wise weighted sum. For instance, the merging model 325 can receive three attention maps for each pixel. For one pixel, a trainable 1x1 convolution can be performed on the three candidates (fed as a three-channel input) to determine three probabilities for each attention weight. A linear summing can be performed on the three probabilities. In some examples, a softmax can be used to combine the three channels. This can be referred to as per-pixel gating. Per-pixel gating is a soft classifier that can be used to determine how much of, and which parts of, A_{F}, Aₜ, and/or A_{cross(t)} to bring into A_{fused}.

In an example, for pixel (i,j), there are three attention candidates [A_{F_}ij, A_{t_}ij, A_{cross}_ij]. A simple 1x1 convolution layer and softmax predicts [p_{F_}ij, p_{t_}ij, p_{cross_}ij], a set of probabilities that sum to one. The final attention value for pixel (i,j) is therefore A_{F_}ij*p_{F} + A_{t_}ij*p_{t_}ij + A_{cross_}ij *p_{cross_}ij.

In some examples, the attention maps can be merged by element-wise product, concatenation, or exponential moving average. An exponential moving average is a type of moving average that gives more weight to recent data points than older ones. This value is therefore more responsive to changes than a simple moving average, which assigns equal weight to all data points. In some examples, the attention maps are concatenated along the channel axis and projected back to the original shape using a convolution.

A result of the merging of A_{cross}, At, and A_{F} is attention map A_{fused}. The attention map A_{fused} thus fuses the temporal attention (from attention map A_{cross(t)}) with the spatial attention (from self-attention map At) and buffer attention (from geometric attention map A_{F}). The attention map A_{fused} represents a joint attention score that can then be applied to values Vₜ.

The transformer block 300 uses both Xt and X̅ₜ₋₁ as values Vₜ, Vₜ₋₁ respectively in two separate steps in order to sample from both the current Frame t and historical frames (Frame t-1, Frame t-2, and/or additional previous frames). For example, referring to FIG. 3, the joint attention score A_{fused} is used to re-weight values Vₜ of the current frame, and the cross-attention score A_{cross(t)} is used to re-weight values Vₜ₋₁ of the preceding frame.

The fused attention map A_{fused} can be applied to aggregate the value Vₜ and to amplify matches that are both spatially and temporally consistent. At attention operation 334, A_{fused} is applied to Vₜ by matrix multiplication. Since Xt is used as the value Vₜ in the attention operation 334, the attention operation at 334 is guided spatial aggregation. Given the attention map Afused, the information in Xt is used to denoise each pixel. The output of 334 therefore corresponds to a spatially denoised Xt.

At attention operation 332, A_{cross(t)} is applied to Vₜ₋₁ by matrix multiplication. Since X̅ₜ₋₁ is used as the value Vₜ₋₁ in the attention operation 332, the attention operation 332 is a spatio-temporal aggregate in which information from the history buffer B_{H} is sampled to reconstruct the current frame.

The result of the application of A_{cross(t)} to Vₜ₋₁ is combined at operation 336 with the result of the application of A_{fused} to Vₜ by a linear weighted sum. In this way, the output of the attention operation 334 is sampled from the current frame and the output of the attention operation 332 is sampled from the history. Merging the two outputs at operation 336 provides the final results refined from both outputs. This results in high quality denoised features that leverage both current spatial and past spatio-temporal information.

The resulting output of operation 336 are the denoised features X̅ₜ of the current frame. The denoised features X̅ₜ can be passed to subsequent transformer layers or directly to an image reconstruction head. In some examples, the denoised features X̅ₜ are passed to the input of a feed-forward network. The denoised features X̅ₜ can also be provided as input to the transformer block for cross-attention with the noisy frame features of the next frame.

In some implementations, the vision transformer is trained using a set of noisy image frames and corresponding ground truth image frames. The vision transformer can process the training set of noisy image frames to obtain an output including a set of denoised image frames. Parameters of the vision transformer can be updated based on a comparison of the set of denoised image frames and the ground truth image frames.

End-to-end supervised training with ground-truth clean frames encourages the model to learn temporally coherent denoising while suppressing ghosting and flicker. The transformer block 300 is drop-in compatible with ViT, Swin, and NAFNet blocks and adds negligible overhead relative to the gains in temporal stability. A denoising neural framework can be formed by cascading multiple transformer blocks.

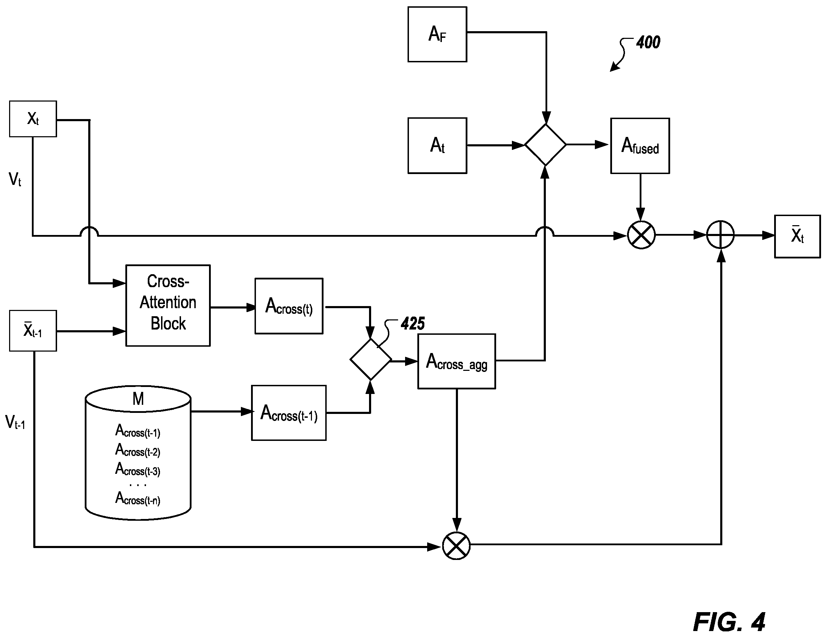

FIG. 4 depicts an example transformer block 400 including a self-attention module and a cross-attention module with temporal accumulation.

To provide for temporal accumulation, a cross-attention map A_{cross(t)} for a current frame is merged with one or more historical cross-attention maps (e.g., cross-attention maps of historical image frames. This enables temporal accumulation of attention maps across multiple frames. For example, multiple historical cross-attention maps A_{cross(t)} can be combined to generate aggregated cross-attention map A_{cross_agg}.

A first attention map A_{cross(t)} represents cross-attention calculated between the current Frame T and a first historical frame (Frame t-1), as described with respect to FIG. 3. A second attention map A_{cross(t-1)} represents attention calculated between the first historical frame (Frame t-1) and a second historical frame (Frame t-2). The second cross-attention map A_{cross(t-1)} can be an attention map that is computed during rendering of Frame t-1 and is stored in memory M. The second cross-attention map A_{cross(t-1)} can be accessed by the transformer block during rendering of the current Frame t in order to generate the aggregated cross-attention map A_{cross_agg}.

Historical cross-attention maps are cross-attention maps that were computed for frames preceding the current Frame t in the temporal sequence. The memory M can store any number of historical cross-attention maps. For example, the memory M can store cross attention maps A_{cross(t-1)}, A_{cross(t-2)}, A_{cross(t-3)}, ... , A_{cross(t-n)}. The memory M can be, for example, a memory of a computing device running the transformer model (e.g., a graphic processing units (GPU), a neural processing unit (NPU)). In this way the historical cross-attention maps can be stored directly on the computing device, enabling for quick access and quick updating.

A merging model 425 merges the second cross-attention map A_{cross(t-1)} with the first cross-attention map A_{cross(t)} to generate the aggregated cross-attention map A_{cross_agg}. In some examples, the merging model 425 is a learnable small convolution that takes A_{cross(t)}, A_{cross(t-1)}, and/or additional historical cross-attention maps as input, and output a single aggregated attention map A_{cross_aggregated}.

In some implementations, the merging model 425 can merge the historical cross-attention maps using any of the merging processes described above with reference to the merging model 325 (e.g., per-pixel gating, exponential moving average, concatenation, element-wise product, or any combination thereof).

The merging of multiple historical cross-attention maps enables the transformer block to query values from older frames, compared to the preceding frame t-1. The number of historical frames stored and accessed can depend on the compute budget. More frames and/or cross-attention maps stored in the history buffer B_{H} and/or the memory M requires more compute. In some examples, the number of frames stored and accessed can depend on content of the image frames. For example, in a fast-paced scene or game, older frames are less relevant to the current frame, compared to a slow-paced scene or game. Therefore, during slow-paced scenes, fewer historical image frames and cross-attention maps may be accessed.

In some implementations, the history buffer B_{H} might not be updated at every frame. For example, a quality assessment may determine that a particular frame has failed (e.g., due to a number of artifacts exceeding a threshold). As a result of the failed quality assessment, the frame can be rejected from the history buffer B_{H}. In another example, the history buffer B_{H} might not be updated during a static scene or scenario in which the camera is not moving and there is little change in lighting). In this example, the first frame of the scene can be used as a reference buffer for the whole scene until the camera moves or an event happens that causes the scene to become more dynamic.

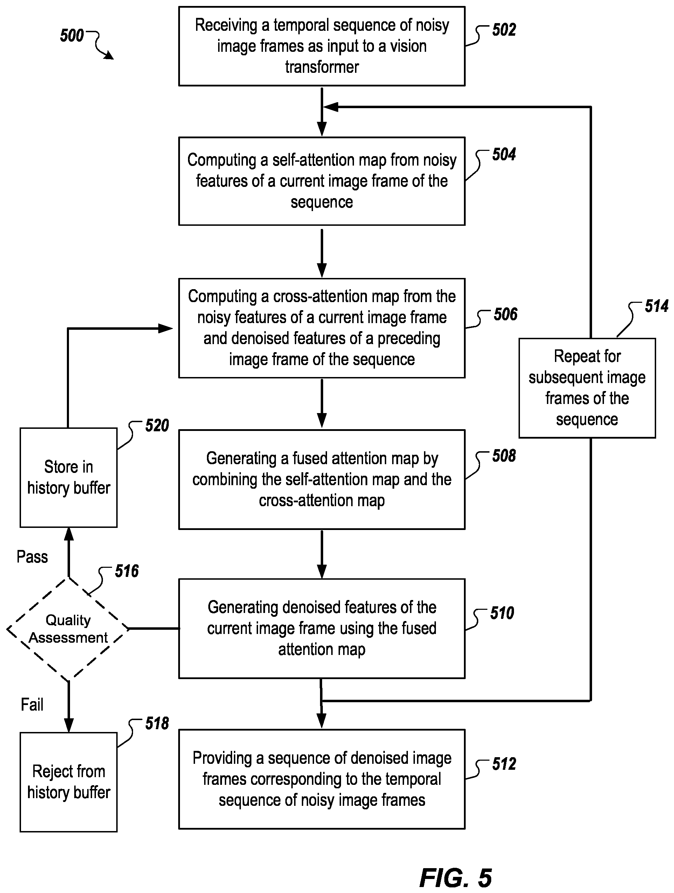

FIG. 5 is a flow diagram of an example process 500 in accordance with implementations of the present disclosure. The process 500 can be performed, for example, by a vision transformer including the transformer block 300 shown in FIG. 3 or the transformer block 400 shown in FIG. 4.

The process 500 include receiving a temporal sequence of noisy image frames as input to a vision transformer (502). The image frames can be, for example, image frames representing a virtual environment such as a virtual environment for a video game.

The process 500 includes computing a self-attention map from noisy features of a current image frame of the sequence (504). For example, referring to FIG. 3, the self-attention block 304 computes the self-attention map At from noisy features Xt of a current image frame t.

The process 500 includes computing a cross-attention map from the noisy features of a current image frame and denoised features of a preceding image frame of the sequence (506). For example, referring to FIG. 3, the cross-attention block 310 computes the cross-attention map A_{cross(t)} from the noisy features Xₜ of the current image Frame t and denoised features X̅ₜ₋₁ of the preceding image Frame t-1.

The process 500 includes generating a fused attention map by combining the self-attention map and the cross-attention map (508). For example, referring to FIG. 3, the merging model 325 generates the fused attention map A_{fused} by combining the self-attention map At and the cross-attention map A_{cross(t)}. In some implementations, the merging model 325 generates the fused attention map A_{fused} by combining the self-attention map At, the cross-attention map A_{cross(t)}, and a geometric attention map A_{F}.

The process 500 includes generating denoised features of the current image frame using the fused attention map (510). For example, referring to FIG. 3, the transformer block 300 generates denoised features X̅ₜ of the current image Frame t using the fused attention map A_{fused}. The fused attention map A_{fused} is applied to values Vₜ of the noisy features of the current image Frame t.

The process 500 includes repeating steps 504 to 510 for subsequent image frames of the sequence (514). For example, steps 504 to 510 can be repeated for image frames t+1, t+2, ..., t+m. For each repetition, the denoised image features X̅ₜ of the preceding image frame can be used to compute the cross-attention of the next image frame.

In some implementations, the process 500 includes a quality assessment step (516). The quality assessment step (516) can reject X̅ₜ₋₁ if the denoising has failed. For instance, when the vision transformer model denoises a frame, the quality check may determine that artifacts such as ghosting and/or blurriness are present. When the frame fails the quality assessment, the model can reject 518 the frame from the history buffer B_{H} to prevent propagating errors to the next frames. When the frame passes the quality assessment, the model can store 520 the denoised features of the image frame in the history buffer B_{H}. The stored denoised features can then be accessed at step 506 to compute the cross-attention map for the next image frame and/or additional subsequent image frames.

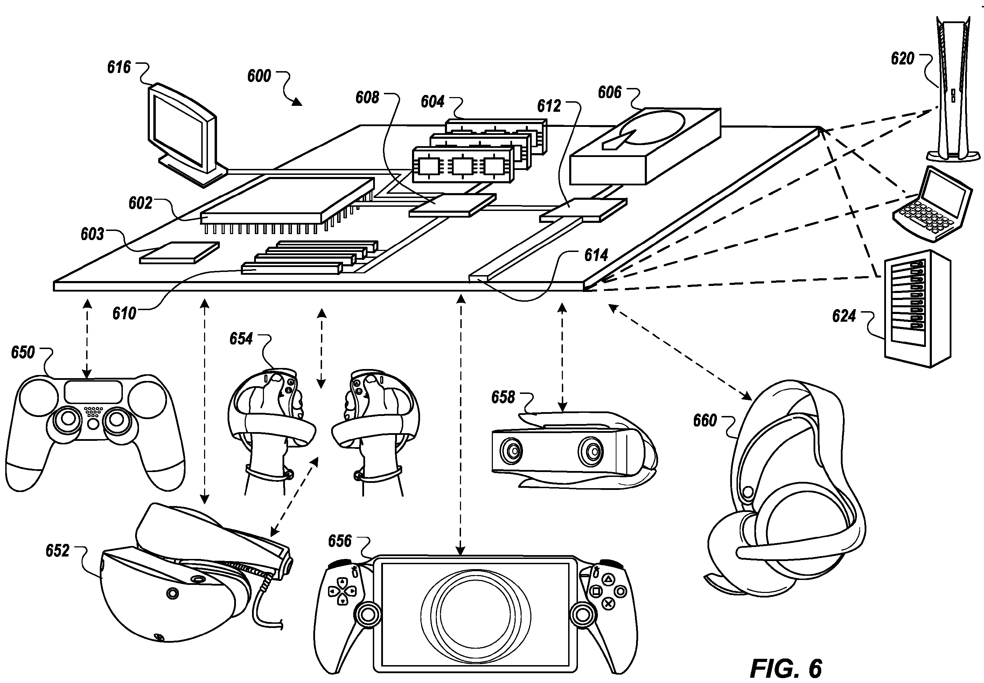

FIG. 6 shows an example of a computing device 600 and associated accessories that can be employed to execute implementations of the present disclosure. The computing device 600 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 600 can form at least a portion of a gaming system that can include one or more remote computing devices such as ones implementing a cloud-based portal or gaming platform.

In various implementations, the computing device 600 includes some combination of one or more processors or central processing units (CPUs) 602, one or more graphic processing units (GPUs) 603, memory 604, one or more storage devices 606, a high-speed interface 608, and/or a low-speed interface 612. In some implementations, the high-speed interface 608 connects to the memory 604 and multiple high-speed expansion ports 610. In some implementations, the low-speed interface 612 connects to a low-speed expansion port 614 and the storage device 604. In some implementations, the high-speed interface 608 connects to the storage device 604. Each of the processor 602, the GPU 603, the memory 604, the storage device 606, the high-speed interface 608, the high-speed expansion ports 610, and the low-speed interface 612, are interconnected using various buses, and may be mounted on a common motherboard or in other manners as appropriate. The processor 602 can process instructions for execution within the computing device 600, including instructions stored in the memory 604 and/or on the storage device 606 to display graphical information for a graphical user interface (GUI) on an external input/output device, such as a display 616 coupled to the high-speed interface 608. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 604 stores information within the computing device 600. In some implementations, the memory 604 is a volatile memory unit or units. In some implementations, the memory 604 is a non-volatile memory unit or units. The memory 604 may also be another form of a computer-readable medium, such as a magnetic or optical disk. In some implementations, the memory 604 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 606 is capable of providing mass storage for the computing device 600. In some implementations, the storage device 606 may be or include a computer-readable medium, such as a hard disk device, an optical disk device, a flash memory, or other similar solid-state memory device, or an array of devices, including devices in a storage area network or other configurations. In some implementations, the storage device 606 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 606 can be configured to support expandable storage via compatible non-volatile memory express (NVMe) SSDs. Instructions can be stored in an information carrier, and when executed by one or more processing devices, such as processor 602, perform one or more methods, such as those described above. The instructions can also be stored by one or more storage devices, such as non-transitory computer-readable or machine-readable mediums, such as the memory 604, the storage device 606, or memory on the processor 602. The instructions can constitute software for providing interactive game play on a user interface such as a graphical user interface (GUI) presented on the display 616.

The high-speed interface 608 manages bandwidth-intensive operations for the computing device 600, while the low-speed interface 612 manages lower bandwidth-intensive operations. Such allocation of functions is an example only. In some implementations, the high-speed interface 608 is coupled to the memory 604, the display 616 (e.g., through a graphics processor or accelerator), and to the high-speed expansion ports 610, which may accept various expansion cards. In the implementation, the low-speed interface 612 is coupled to the storage device 606 and the low-speed expansion port 614. The low-speed expansion port 614, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 650 such as a DualSense^{®}, DualShock^{®}, or Access^{™} controllers for PlayStation^{®} devices, a virtual reality (VR) or augmented reality (AR) headset 652 such as the PS VR2 headset, accessory controllers 654 such as PS VR2 Sense^{™} a handheld gaming device 656 such as PlayStation Portal^{®}, a camera 658, and/or an earphone/headphone set 660 such as the PULSE Elite^{™} headset or the Pulse Explore^{™} earbuds. In some implementations, the computing device 600 includes one or more acoustic transducers, and/or is connected to one or more external acoustic transducers such as one or more speakers associated with the display 616.

The computing device 600 may be implemented in a number of different forms, as shown in the FIG. 6. For example, the computing device 600 may be implemented as a gaming console 620, or as one or more servers 624 or as a rack within a server. In some implementations, the computing device 600 may be implemented as a personal computer such as a laptop computer 622. In some implementations, the computing device 600 can be implemented as a mobile device such as the connected handheld gaming device 656. In some implementations, a computing device can include one or more of the computing device 600, and an entire system may be made up of multiple computing devices communicating with each other. For example, a gaming system can include one or more of a gaming console 620, one or more accessories, and a remote platform such as a cloud-based platform implemented on one or more servers 624.

The processor 602 can be implemented as a chipset of chips that include separate and multiple analog and digital processors. For example, the processor 602 can be a multi-core processor that supports high-speed processing and enables complex computational tasks, real-time physics simulations, and advanced artificial intelligence (AI) capabilities. In one example, the processor 602 includes at least 8 cores, at least 16 threads, and operates at variable frequencies around 3.5 GHz or more. In some implementations, the processor 602 may be a Complex Instruction Set Computers (CISC) processor, a Reduced Instruction Set Computer (RISC) processor, or a Minimal Instruction Set Computer (MISC) processor.

In some implementations, the GPU 603 includes a custom GPU that supports an advanced architecture such as the RDNA 2 architecture developed by AMD. In one example, the GPU 603 includes at least 36 compute units running at speeds of 2 GHz or more, and delivers performance of at least 10 teraflops. The GPU 603 can be configured to support high quality graphics rendering. For example, the GPU 603 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 650-e.g., a DualSense^{®}, DualShock^{®}, or Access^{™} controller for PlayStation^{®} devices-to provide the gaming experience. In some implementations, the controller 650 features a high-fidelity haptic feedback system with one or more actuators that simulate a wide range of tactile sensations. In some implementations the controller 650 includes one or more adaptive triggers that adjust resistance based on in-game actions to provide for a realistic feel. The ergonomic design of the controller 650 can be configured to allow for comfortable use even in long gaming sessions. For example, the controller 650 can include textured grips and an optimized button layout. In some implementations, the controller 650 includes one or more of: integrated motion sensors, a high-resolution touchpad, and a built-in microphone array. The controller 650 includes an array of buttons, joysticks, and other controls that allow a user to interact with the computing device 600 to participate in interactive gameplay presented, for example, on a display device such as the display 616. The controller 650 can be powered by one or more regular or rechargeable batteries and supports both wireless and wired connectivity with the computing device 600, for example, via Bluetooth, WiFi, USB-C etc., or via a proprietary connection such as PlayStation Link^{™}. In some implementations, the controller 650 includes a light bar and player indicators for visual feedback and customization.

In some implementations, the input/output or accessory device includes a VR/AR headset 652. One example of such a headset is the PlayStation VR2 (PS VR2) headset that is configured to provide an immersive and interactive gaming experience. In some implementations, the headset 652 features dual organic light emitting device (OLED) displays with a combined resolution of 4000 x 2080 pixels-thus providing sharp visuals and a wide field of view. In some implementations, the VR/AR headset 652 includes advanced eye-tracking technology that enables foveated rendering, optimizing performance by focusing on where the user is looking. In some implementations, the headset 652 includes integrated cameras that facilitate tracking head movements without external sensors. In some implementations, the headset includes haptic feedback for tactile sensations and/or one or more acoustic transducers configured to provide a spatial sound effect the user. The headset 652 can include an adjustable headband and cushioned padding, and can be configured to connect to the computing device 600 either over a wireless network (e.g., over a WiFi^{®} or Bluetooth^{®} connection, or a proprietary connection such as PlayStation Link^{™}) or over a wire such as a USB-C cable.

In some implementations, the headset 652 can be configured to work in conjunction with one or more accessory controllers 654 such as the PlayStation VR2 Sense^{™} controllers. The accessory controllers 654 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 654 can be configured to provide a comfortable experience even during extended gameplay. In some implementations, the accessory controllers include one or more integrated sensors (accelerometer, gyroscope, etc.) and cameras to provide motion tracking. The accessory controllers 654 can be configured to connect to the computing device 600 and/or the headset 652 over a wireless connection such as WiFi^{®} or Bluetooth^{®}.

In some implementations, the computing device 600 can be connected to a handheld gaming device 656 such as the PlayStation Portal^{®}. The handheld gaming device 656 can be configured to stream games and media from the computing device 600 via a wireless connection such as WiFi^{®} or Bluetooth^{®}. The handheld gaming device 656 includes a high-resolution screen that allows users to play games and/or stream media remotely without using the display 616 connected to the computing device 600. This allows the display to be used for other purposes while the computing device 600 facilitates gameplay on the handheld gaming device 656. In some implementations, the handheld gaming device 656 is configured to act as a streaming receiver without running games natively on the device 656 itself. This makes the handheld gaming device 656 a convenient option for playing games run on the computing device 600, while leaving a TV connected to the computing device 600 free to be used for viewing other media. The handheld gaming device 656 can includes buttons and features similar to (or even same as) the controller 650, thus providing for a similar gaming experience as that with the controller 650.

In some implementations, the input/output or accessory devices can include a camera 658 and/or an earphone/headphone set 660 such as the PULSE Elite^{™} headset or the Pulse Explore^{™} earbuds. The camera 658 can be used to track user-movements, which in turn can be used as an input to an interactive game being executed on the computing device 600. The earphone/headphone set 660 can be used to provide audio feedback/output to a user from the computing device 600. In some implementations, the earphone/headphone set 660 can include a microphone configured to receive spoken inputs/instructions that in turn can be used to control an interactive game being executed on the computing device 600.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
receiving a temporal sequence of noisy image frames as input to a vision transformer configured to denoise the sequence of noisy image frames using at least a self-attention module and a cross-attention module;
for each of a plurality of image frames of the temporal sequence of image frames:
computing, using the self-attention module, a self-attention map from noisy features of a current image frame of the sequence,
computing, using the cross-attention module, a cross-attention map from the noisy features of the current image frame and denoised features of a preceding image frame of the sequence,
generating a fused attention map by combining the self-attention map and the cross-attention map, and
generating denoised features of the current image frame, including applying the fused attention map to values of the noisy features of the current image frame; and
providing a sequence of denoised image frames corresponding to the temporal sequence of noisy image frames for presentation by a display system.

2. The computer-implemented method of claim 1, comprising:
accessing geometric features of the current image frame from a buffer; and
computing, using the self-attention module, a geometric attention map from the geometric features of the current image frame using the self-attention module,
wherein computing the fused attention map comprises combining the self - attention map, the cross-attention map, and the geometric attention map.

3. The computer-implemented method of claim 2, wherein the geometric features include one or more of: depth, surface orientation, albedo, ambient occlusion, specular reflection intensity, shadow intensity, light emission, or motion.

4. The computer-implemented method of claim 2, wherein combining the self-attention map, the cross-attention map, and the geometric attention map comprises performing per-pixel gating between the self-attention map, the cross-attention map, and the geometric attention map.

5. The computer-implemented method of claim 1, comprising training the vision transformer, including:
obtaining a training set of noisy image frames;
obtaining a set of ground truth image frames corresponding to the training set of noisy image frames;
processing the training set of noisy image frames with the vision transformer to obtain an output including a set of denoised image frames; and
updating parameters of the vision transformer based on a comparison of the set of denoised image frames and the ground truth image frames.

6. The computer-implemented method of claim 1, comprising storing denoised features of one or more previous frames in a history buffer, the one or more previous frames including the preceding image frame.

7. The computer-implemented method of claim 1, wherein the cross-attention map comprises an aggregated cross-attention map, and computing the aggregated cross-attention map comprises:
computing, using the cross-attention module, a first cross-attention map from the noisy features of the current image frame and the denoised features of the preceding image frame of the sequence;
accessing a second cross-attention map from a memory, the second cross-attention map being computed from the noisy features of the preceding image frame and denoised features of another previous image frame of the sequence; and
computing the aggregated cross-attention map by combining the first cross-attention map and the second cross-attention map.

8. The computer-implemented method of claim 7, wherein combining the first cross-attention map and the second cross-attention map comprises performing a convolution on the first cross-attention map and the second cross-attention map.

9. The computer-implemented method of claim 1, wherein generating the denoised features of the current image frame further comprises:
obtaining a first output from applying the fused attention map to values of the noisy features of the current image frame;
obtaining a second output from applying the cross-attention map to values of the denoised features of the preceding image frame; and
combining the first output and the second output.

10. The computer-implemented method of claim 1, wherein the sequence of noisy image frames represents one or more objects in a virtual environment.

11. The computer-implemented method of claim 10, wherein each image frame of the sequence of noisy image frames captures the virtual environment at a different respective time instance.

12. The computer-implemented method of claim 1, wherein the noisy features of the current image frame are patch-embedded.

13. The computer-implemented method of claim 1, wherein the denoised features of the preceding image frame are patch-embedded.

14. A computer-implemented system comprising:
at least one processor; and
a memory storing instructions that, when executed by the at least one processor, cause the at least one processor to perform operations, comprising:
receiving a temporal sequence of noisy image frames as input to a vision transformer configured to denoise the sequence of noisy image frames using at least a self-attention module and a cross-attention module;
for each of a plurality of image frames of the temporal sequence of image frames:
computing, using the self-attention module, a self-attention map from noisy features of a current image frame of the sequence,
computing, using the cross-attention module, a cross-attention map from the noisy features of the current image frame and denoised features of a preceding image frame of the sequence,
generating a fused attention map by combining the self-attention map and the cross-attention map, and
generating denoised features of the current image frame, including applying the fused attention map to values of the noisy features of the current image frame; and
providing a sequence of denoised image frames corresponding to the temporal sequence of noisy image frames for presentation by a display system.

15. The computer-implemented system of claim 14, the operations comprising:
accessing geometric features of the current image frame from a buffer; and
computing, using the self-attention module, a geometric attention map from the geometric features of the current image frame using the self-attention module,
wherein computing the fused attention map comprises combining the self - attention map, the cross-attention map, and the geometric attention map.

16. The computer-implemented system of claim 15, wherein the geometric features include one or more of: depth, surface orientation, albedo, ambient occlusion, specular reflection intensity, shadow intensity, light emission, or motion.

17. The computer-implemented system of claim 15, wherein combining the self-attention map, the cross-attention map, and the geometric attention map comprises performing per-pixel gating between the self-attention map, the cross-attention map, and the geometric attention map.

18. The computer-implemented system of claim 14, comprising training the vision transformer, including:
obtaining a training set of noisy image frames;
obtaining a set of ground truth image frames corresponding to the training set of noisy image frames;
processing the training set of noisy image frames with the vision transformer to obtain an output including a set of denoised image frames; and
updating parameters of the vision transformer based on a comparison of the set of denoised image frames and the ground truth image frames.

19. The computer-implemented system of claim 14, comprising storing denoised features of one or more previous frames in a history buffer, the one or more previous frames including the preceding image frame.

20. One or more non-transitory computer readable media storing instructions, wherein the instructions, when executed by at least one processor, cause the at least one processor to perform operations, comprising:
receiving a temporal sequence of noisy image frames as input to a vision transformer configured to denoise the sequence of noisy image frames using at least a self-attention module and a cross-attention module;
for each of a plurality of image frames of the temporal sequence of image frames:
computing, using the self-attention module, a self-attention map from noisy features of a current image frame of the sequence,
computing, using the cross-attention module, a cross-attention map from the noisy features of the current image frame and denoised features of a preceding image frame of the sequence,
generating a fused attention map by combining the self-attention map and the cross-attention map, and
generating denoised features of the current image frame, including applying the fused attention map to values of the noisy features of the current image frame; and
providing a sequence of denoised image frames corresponding to the temporal sequence of noisy image frames for presentation by a display system.
